# EUROPEAN PATENT APPLICATION

(11) **EP 4 610 644 A1**
(43) Date of publication of application: **03.09.2025**
(21) Application number: 24160890.0
(22) Date of filing: 01.03.2024
(51) Int. Cl.: G01N 29/02, G01N 29/036, G01N 29/22

(54) **MICRO-OPTOMECHANICAL SENSOR AND FABRICATION METHOD THEREOF**

(71) Applicant: Imec VZW, 3001 Leuven (BE)
(72) Inventor: Mahmud-Ul, Hasan Md, 3000 Leuven (BE); Severi, Simone, 3000 Leuven (BE)
(74) Representative: Körfer, Thomas

(57) **Abstract**

A micro-optomechanical sensor (100) is provided. The sensor comprises a surface (101) comprising a cavity (102) and a fluidic channel (103) on the surface (101) connected to the cavity (102), wherein the fluidic channel (103) is configured to transport a fluid sample to the cavity (102). The sensor further comprises a cantilever (105) on the surface (101) being laterally extended inside the cavity (102), wherein at least one side of the cantilever (105) is configured to be in contact with the fluid sample inside the cavity (102). Moreover, the sensor comprises an optical waveguide (106) on the surface (101) being extended to the cantilever (105), wherein the optical waveguide (106) is configured to couple out a light signal from the cantilever (105) in order to optically transduce a mechanical vibration of the cantilever (105).

## Description

The invention relates to opto-mechanical sensing devices, especially for bio-sensing based on mechanical vibration.

Generally, sensing a small vibration or motion can be useful in various fields. It can also be used to characterize any biological system that may have a signature motion. Moreover, a fabrication technique to facilitate highly sensitive nano-motion sensors can be extremely useful for various fields. One of such application may be to screen the drug or antibody. In this regard, the sensor can be used to detect a change in the living body in terms of a change in vibration due to the application of the drug or antibody.

For example, the document Burg et al., Weighing of biomolecules, single cells and single nanoparticles in fluid, Nature 446, 1066-1069 (2007), doi: 10.1038/nature05741 discloses nano-mechanical resonators for the sensing mass changes. In this regard, a cantilever arrangement with a micro-channel is provided to translate the mass changes of the fluid traversing through the channel into changes in resonance frequency. However, the change in the vibration of the cantilever may be affected by the flow of the fluid through the channel formed in the cantilever.

Accordingly, an object of the invention is to provide a micro-optomechanical sensor and a fabrication method thereof for facilitating an improved bio-sensing scheme based on mechanical vibration, which is also suitable for massive parallelization.

The object is solved by the features of the first independent claim for the micro-optomechanical sensor and by the features of the second independent claim for the method. The dependent claims contain further developments.

According to a first aspect of the invention, a micro-optomechanical sensor is provided. The sensor comprises a surface comprising a cavity, and a fluidic channel on the surface connected to the cavity, wherein the fluidic channel is configured to transport a fluid sample to the cavity. The sensor further comprises a cantilever on the surface being laterally extended inside the cavity, wherein at least one side of the cantilever is configured to be in contact with the fluid sample inside the cavity.

Moreover, the sensor comprises an optical waveguide on the surface being extended to the cantilever, wherein the optical waveguide is configured to couple out a light signal from the cantilever in order to optically transduce a mechanical vibration of the cantilever.

Therefore, the cavity, especially the micro-cavity, may be advantageously used as a reservoir for the fluid sample and hence the vibration of the cantilever may not be affected by the flow of the fluid sample, which may improve the sensing accuracy. Moreover, by means of the integrated optical waveguide, a change in the vibration of the cantilever can be optically translated to identify an interaction or to map multiple interactions of the cantilever with the sample fluid within the cavity.

For example, the fluid sample is a biological sample comprising at least one biological cell to be classified and/or identified.

Preferably, the at least one side of the cantilever comprises a coating of at least one antibody and/or at least one antigen and/or at least one protein and/or at least one aptamer corresponding to at least one biological cell in the fluid sample, e.g., the at least one biological cell of the biological sample.

Preferably, the mechanical vibration of the cantilever corresponds to a natural resonance frequency. Alternatively, the mechanical vibration of the cantilever corresponds to a resonance frequency higher or lower than the natural resonance frequency due to an interaction of the at least one biological cell with the coating.

Advantageously, for example, cell-specific signatures can be effectively identified and/or classified by detecting the changes in the resonance frequency.

Preferably, the surface further comprises an inlet connected to the fluidic channel, wherein the inlet is configured to receive the fluid sample and further to transport the fluid sample to the fluidic channel.

Preferably, the cantilever is arranged on the surface in a non-overlapping manner with respect to the fluidic channel on the surface. Additionally or alternatively, the cantilever is arranged on the surface in a non-overlapping manner with respect to the inlet on the surface.

Alternatively, the cantilever is arranged on the surface in a non-overlapping manner with respect to both the inlet and the fluidic channel on the surface.

Advantageously, for example, the flow of the fluid sample may not be affected by the motion or vibration of the cantilever, which may further improve the sensing accuracy.

Preferably, the optical waveguide is a dielectric waveguide, preferably a silicon-based waveguide. Advantageously, for example, a low transmission loss and a good light confinement can be achieved, especially for the light traversing along the surface as well as along the cantilever.

Preferably, the surface is a processed silicon-on-insulator, SOI, wafer. Advantageously, for example, a high yield can be achieved, especially for realizing a large number of parallel sensors in a highly dense manner.

According to a second aspect of the invention, a sensor system is provided. The sensor system comprises at least one micro-optomechanical sensor, preferably a plurality of micro-optomechanical sensors, according to the first aspect of the invention. The sensor system further comprises at least one light source optically coupled to the optical waveguide of the at least one micro-optomechanical sensor, preferably the optical waveguides of the respective plurality of micro-optomechanical sensors, wherein the at least one light source is configured to generate the light signal for the optical waveguide of the at least one micro-optomechanical sensor, preferably for each of the optical waveguides of the respective plurality of micro-optomechanical sensors.

Moreover, the sensor system comprises a processing device, especially arranged in relation to the cantilever of the at least one micro-optomechanical sensor, preferably to the cantilevers of the respective plurality of micro-optomechanical sensors, the processing device being optically coupled to the at least one micro-optomechanical sensor, preferably to the plurality of micro-optomechanical sensors, wherein the processing device is configured to receive the light signal coupled out from the optical waveguide of the at least one micro-optomechanical sensor, preferably from each of the optical waveguides of the respective plurality of micro-optomechanical sensors, and further to optically transduce the mechanical vibration of the cantilever of the at least one micro-optomechanical sensor, preferably the mechanical vibration of the cantilevers of the respective plurality of micro-optomechanical sensors.

In this regard, for the at least one micro-optomechanical sensor, preferably for each of the plurality of the micro-optomechanical sensors, the processing device is further configured to process the light signal coupled out from the optical waveguide to detect a change in the resonance frequency of the mechanical vibration of the cantilever due to the interaction of the at least one biological cell with the coating, and to classify and/or identify the at least one biological cell in the fluid sample based on the detected change in the resonance frequency.

Advantageously, for example, the parallelization of the micro-optomechanical sensors can be achieved, which may reduce the screening time, e.g., to classify and/or identify one or more cell-specific signatures simultaneously or sequentially.

According to a third aspect of the invention, a method is provided for fabricating a micro-optomechanical sensor on a SOI wafer comprising a dielectric layer in between a top silicon layer and a bottom silicon layer. The method comprises a step of defining a length of a cantilever and a length of a cavity on the SOI wafer. In addition, the method comprises a step of processing an optical waveguide on the top silicon layer, the optical waveguide being extended over the length of the cantilever.

Furthermore, the method comprises a step of processing a first etched groove at an edge of the length of the cantilever within the length of the cavity by etching the top silicon wafer, the dielectric layer, and partially the bottom silicon layer from the top silicon layer side.

In addition, the method comprises a step of processing a second etched groove corresponding to the length of the cavity by etching the bottom silicon layer and the dielectric layer from the bottom silicon layer side, thereby forming the cavity in the second silicon layer and the cantilever on the first silicon layer laterally extended inside the cavity.

The method further comprises a step of bonding a substrate on the bottom silicon layer at least encompassing the cavity from the bottom silicon layer side. Moreover, the method comprises a step of processing a fluidic channel on the top silicon layer from the top silicon layer side.

Advantageously, for example, a miniaturization of the micro-optomechanical sensor can be achieved, which may reduce the cost and size, and may allow for massive parallelization.

Preferably, the processing of the optical waveguide comprises a step of forming optical waveguide components on the top silicon layer from the top silicon layer side. Alternatively, the processing of the optical waveguide comprises a step of bonding an additional layer on the top silicon layer and forming optical waveguide components on the additional layer from the top silicon layer side.

Advantageously, for example, the optical waveguide can be processed on the top silicon layer in a flexible manner based on, e.g., the thickness of the sensor, the wavelength of the light, and so on.

Preferably, the processing of the first etched groove and/or the processing of the second etched groove further comprise a step of using the dielectric layer in between the top silicon layer and the bottom silicon layer as a etch stop layer. Advantageously, for example, the processing of the grooves can be effectively and accurately performed.

Preferably, the bonding of the substrate on the bottom silicon layer comprises a step of bonding the substrate on the bottom silicon layer via oxide fusion between the substrate and the bottom silicon layer. Alternatively, the bonding of the substrate on the bottom silicon layer comprises a step of bonding the substrate on the bottom silicon layer via an adhesive layer in between the substrate and the bottom silicon layer.

Advantageously, for example, the cavity in the bottom silicon layer can be effectively sealed in a flexible manner.

Preferably, the processing of the fluidic channel comprises the steps of laminating a dry-film-resist, DFR, on the top silicon layer, patterning the fluidic channel via lithography on the DFR, and hard-baking the patterned DFR.

Advantageously, for example, the fluidic channel can be processed in a simplified manner, whereby additionally protecting the surface and its components by means of the laminated DFR.

Exemplary embodiments of the invention are now further explained with respect to the drawings by way of example only, and not for limitation. In the drawings:
- Fig. 1: shows an exemplary embodiment of the micro-optomechanical sensor according to an aspect of the invention;
- Fig. 2: shows an exemplary embodiment of the sensor system according to an aspect of the invention;
- Fig. 3A: shows an exemplary SOI wafer according to an aspect of the invention;
- Fig. 3B: shows an exemplary process for forming the optical waveguide on the SOI wafer according to an aspect of the invention;
- Fig. 3C: shows an alternative process for forming the optical waveguide on the SOI wafer according to an aspect of the invention;
- Fig. 4A: shows an exemplary process for defining the inplane geometry of the micro-optomechanical sensor according to an aspect of the invention;
- Fig. 4B: shows an alternative process for defining the inplane geometry of the micro-optomechanical sensor according to an aspect of the invention;
- Fig. 5A: shows an exemplary process for forming the cavity and the cantilever according to an aspect of the invention;
- Fig. 5B: shows an alternative process for forming the cavity and the cantilever according to an aspect of the invention;
- Fig. 6A: shows an exemplary process for sealing the cavity according to an aspect of the invention;
- Fig. 6B: shows an alternative process for sealing the cavity according to an aspect of the invention;
- Fig. 7A: shows an exemplary process for forming the fluidic channel according to an aspect of the invention;
- Fig. 7B: shows an alternative process for forming the fluidic channel according to an aspect of the invention; and
- Fig. 8: shows an exemplary flow diagram of the method according to an aspect of the invention.

Reference will now be made in detail to the embodiments of the present invention, examples of which are illustrated in the accompanying drawings. However, the following embodiments of the present invention may be variously modified and the range of the present invention is not limited by the following embodiments.

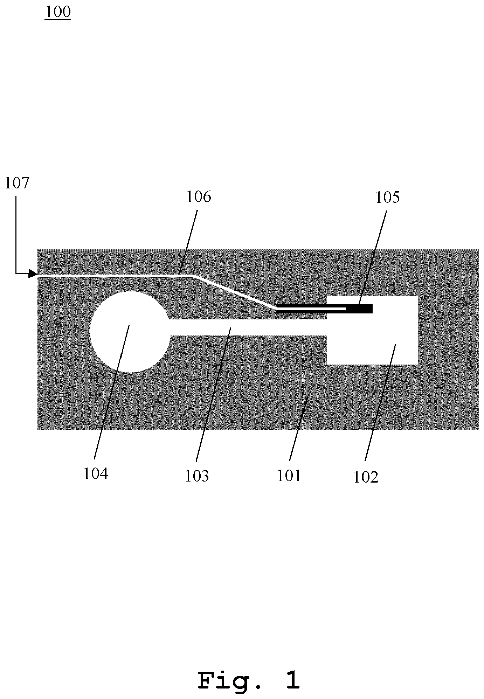

In Fig. 1, an exemplary embodiment of the micro-optomechanical sensor 100 according to the first aspect of the invention is illustrated. The sensor 100 may comprise a surface 101, which may comprise a micro-cavity or a cavity 102. The surface 101 may further comprise a micro-fluidic channel or a fluidic channel 103 connected to the cavity 102. Moreover, the surface 101 may comprise a micro-inlet or an inlet 104 connected to the fluidic channel 103.

In this regard, the inlet 104 may receive a biological sample fluid or a fluid sample and may transport the fluid sample to the fluidic channel 103, where the fluidic channel 103 may further transport the fluid sample to the cavity 102, which may act as a reservoir for the fluid sample.

In addition, the surface 101 may comprise a micro-cantilever or a cantilever 105 being laterally extended inside the cavity 102 such that one side, e.g., the bottom side, of the cantilever 105 may be in contact with the fluid sample inside the cavity 102. Furthermore, the cantilever 105 may be arranged on the surface 101 such that the cantilever 105 may not overlap with the inlet 104 as well as the fluidic sample 103.

In this regard, the bottom side of the cantilever 105 may be coated, e.g., the area or the portion of the bottom side of the cantilever 105 being in contact with the fluid sample, with one or more antibodies, or with one or more antigens, or with one or more proteins, or with one or more aptamers, or a combination thereof. Accordingly, the natural resonance frequency of the vibration of the cantilever 105 may be changed due to the interactions of the biological cells in the fluid sample with the coating.

Moreover, the surface 101 may comprise a micro-optical waveguide or an optical waveguide 106. The optical waveguide 106 may comprise an input port 107 for receiving or coupling-in a light signal, e.g., from an external or an internal light source (not shown). The optical waveguide 106 may be extended to the cantilever 105, for example, to the top side of the cantilever 105 opposite to the coated area of the cantilever 105.

For example, especially at the top side of the cantilever 105, the optical waveguide 106 may comprise an output port (not shown) so that the optical waveguide 106 may couple out the light signal from the top side of the cantilever 105 via the output port in order to optically translate the mechanical vibration of the cantilever 105.

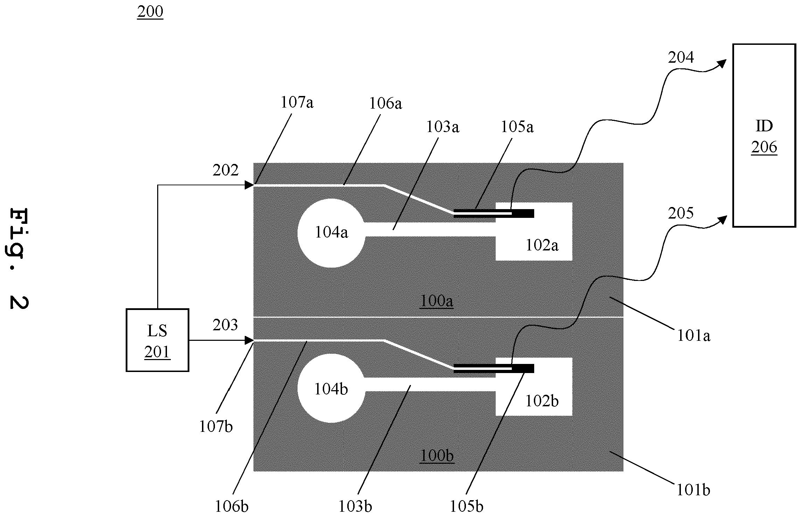

In Fig. 2, an exemplary embodiment of the sensor system 200 according to the second aspect of the invention is illustrated. The sensor system 200 may comprise a first micro-optomechanical sensor 100a and a second micro-optomechanical sensor 100b being operated in parallel. However, the sensor system 200 may comprise more than two micro-optomechanical sensors 100a, 100b that can be operated in parallel.

For example, the first sensor 100a may correspond to the micro-optomechanical sensor 100 of Fig. 1. In this regard, the surface 101a, the cavity 102a, the fluidic channel 103a, the inlet 104a, the cantilever 105a, the optical waveguide 106a, and the light input port 107a may correspond to the surface 101, the cavity 102, the fluidic channel 103, the inlet 104, the cantilever 105, the optical waveguide 106, and the light input port 107 of the micro-optomechanical sensor 100, respectively.

For example, the second sensor 100b may correspond to the micro-optomechanical sensor 100 of Fig. 1. In this regard, the surface 101b, the cavity 102b, the fluidic channel 103b, the inlet 104b, the cantilever 105b, the optical waveguide 106b, and the light input port 107b may correspond to the surface 101, the cavity 102, the fluidic channel 103, the inlet 104, the cantilever 105, the optical waveguide 106, and the light input port 107 of the micro-optomechanical sensor 100, respectively.

For example, the fluid sample of the first sensor 100a and the fluid sample of the second sensor 100b may be different fluid samples, e.g., containing different types of biological cells. Alternatively, the fluid sample of the first sensor 100a and the fluid sample of the second sensor 100b may be similar fluid samples, e.g., containing similar types of biological cells.

For example, the coating of the cantilever 105a of the first sensor 100a and the coating of the cantilever 105b of the second sensor 100b may be different coatings, e.g., containing different types of antibodies and/or antigens and/or proteins and/or aptamers. Alternatively, the coating of the cantilever 105a of the first sensor 100a and the coating of the cantilever 105b of the second sensor 100b may be similar coatings, e.g., containing similar types of antibodies and/or antigens and/or proteins and/or aptamers.

The sensor system 200 may further comprise a light source 201, e.g., a laser light source such as a laser diode. The light source 200 may be optically connected to the light input port 107a of the first sensor 100a via a first optical path 202 such that the light source 201 may provide a first light signal 204 for the optical waveguide 106a of the first sensor 100a via the first optical path 202.

In addition, the light source 200 may be optically connected to the light input port 107b of the second sensor 100b via a second optical path 203 such that the light source 201 may provide a second light signal 205 for the optical waveguide 106b of the second sensor 100b via the second optical path 203.

For example, the first light signal 204 and the second light signal 205 may be light signals with similar electrical and/or optical characteristics, e.g., comprising identical or similar wavelengths. Alternatively, the first light signal 204 and the second light signal 205 may be light signals with different electrical and/or optical characteristics, e.g., comprising different wavelengths.

In this regard, the first optical path 202 and/or the second optical path 203 may comprise different electrical and/or optical modulation circuitry to provide light signals with different characteristics, e.g., wavelengths. Additionally or alternatively, the optical waveguide 106a of the first sensor 100a and/or the optical waveguide 106b of the second sensor 106b may comprise different electrical and/or optical modulation circuitry to provide light signals with different characteristics, e.g., wavelengths.

Moreover, the sensor system 200 may comprise a processing device 206 that is optically coupled to one or more sensors 100a, 100b. It may be noted that the term "optically coupled" is referred as communicating optical signals with or without waveguide/optical fiber from the sensors 100a, 100b to the processing device 206. In one embodiment, processing device 206 may include one or more light detectors configured to receive the light signals 204, 205. Additionally, the processing device 206 may include an imager or an imaging unit. The processing device 206 may be arranged in relation to the cantilever 105a of the first sensor 100a and the cantilever 105b of the second sensor 100b such that the processing device 206 may receive, especially in parallel, the first light signal 204 from the output port of the optical waveguide 106a at the top side of the cantilever 105a of the first sensor 100a and the second light signal 205 from the output port of the optical waveguide 106b at the top side of the cantilever 105b of the second sensor 100b.

In this regard, the processing device 206 may process the first light signal 204 and may detect a change in the resonance frequency of the mechanical vibration of the cantilever 105a of the first sensor 100a, e.g., due to the interaction of the first fluid sample with the coating, and may classify and/or identify one or more cells or the signature of the cells of the first fluid sample based on the detected change in the resonance frequency.

Similarly, the processing device 206 may process the second light signal 205 and may detect a change in the resonance frequency of the mechanical vibration of the cantilever 105b of the second sensor 100b, e.g., due to the interaction of the second fluid sample with the coating, and may classify and/or identify one or more cells or the signature of the cells of the second fluid sample based on the detected change in the resonance frequency.

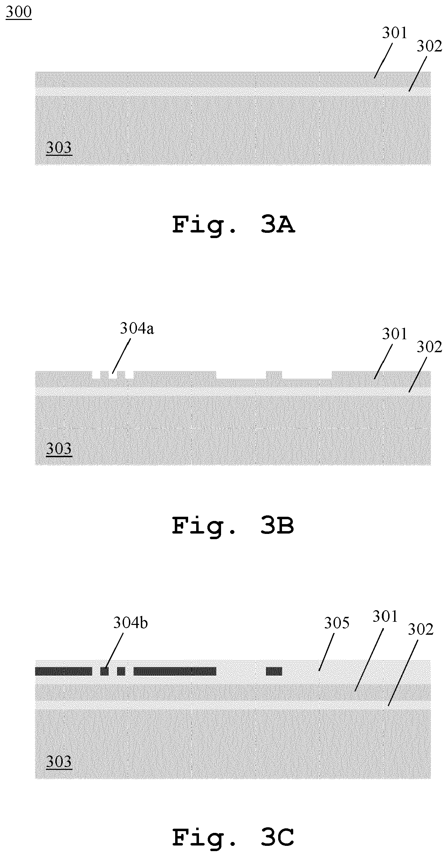

In Fig. 3A, an exemplary SOI wafer 300 according to the third aspect of the invention is illustrated. The SOI wafer 300 may comprise a top silicon layer 301, a bottom silicon layer 303, and a dielectric layer 302, e.g., an oxide-based dielectric such as SiO2, in-between the top silicon layer 301 and the bottom silicon layer 303.

For example, the bottom silicon layer 303 or the SOI substrate may have a thickness of about 1 micrometer to 300 micrometers. The dielectric layer 302 or the buried oxide layer may have a thickness of about 2 micrometers to 20 micrometers. The top silicon layer 301 or the device layer may have a thickness of about 1 micrometer to 30 micrometers.

In Fig. 3B, a first exemplary process for forming the optical waveguide 304a on the SOI wafer 300 according to the third aspect of the invention is illustrated. For example, a length of the cantilever may be defined on the top silicon layer 301. Afterwards, the optical waveguide 304a may be processed on the top silicon layer 301 from the top silicon layer side (front-end processing) such that the optical waveguide 304a may extend along the defined length of the cantilever. In this regard, the top silicon layer 301 may be patterned to make the waveguide components in a suitable manner during the front-end processing.

In Fig. 3C, a second exemplary process for forming the optical waveguide 304b on the SOI wafer 300 according to the third aspect of the invention is illustrated. For example, an additional dielectric layer 305 may be added on the top silicon layer 301, e.g., via fusion or dielectric bonding. Afterwards, the length of the cantilever may be defined on the additional layer 305.

Furthermore, the optical waveguide 304b may be processed on the additional layer 305 from the top silicon layer side (front-end processing) such that the optical waveguide 304b may extend along the defined length of the cantilever. In this regard, the additional layer 305 may be patterned to make the waveguide components in a suitable manner during the front-end processing.

The additional layer 305 may have a thickness of about 1.5 micrometers. The optical waveguide 304b, especially the waveguide components, may be realized as planar waveguide components, e.g., SiN waveguide components.

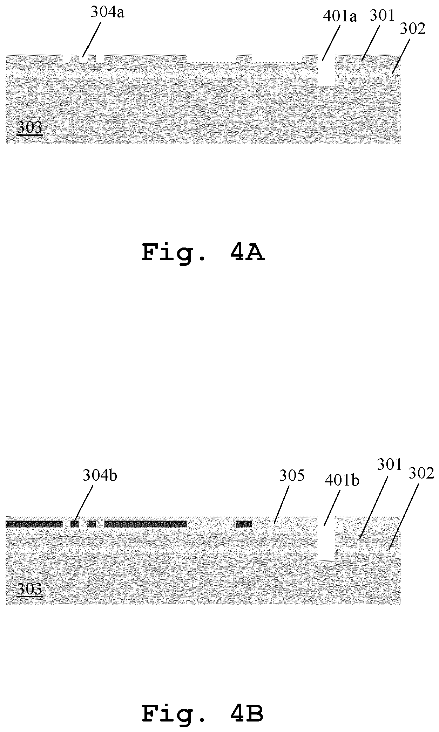

In Fig. 4A, a first exemplary process for defining the in-plane geometry of the micro-optomechanical sensor according to the third aspect of the invention is illustrated. In this regard, a groove 401a may be formed in the front-end processing, especially at an edge of the defined length of the cantilever, by etching the top silicon layer 301, especially the processed top silicon layer as shown in Fig. 3A, the dielectric layer 302, and partially the bottom silicon layer 303.

For example, the dielectric layer 302 may be used as the stopping layer for the lithography and the subsequent etching to realize the groove 401a. In this regard, the groove 401a may define the in-plane geometry of the sensor, especially of the cantilever of the sensor.

In Fig. 4B, a second exemplary process for defining the in-plane geometry of the micro-optomechanical sensor according to the third aspect of the invention is illustrated. In this regard, a groove 401b may be formed in the front-end processing, especially at an edge of the defined length of the cantilever, by etching the additional layer 305, especially the processed additional layer as shown in Fig. 3B, the top silicon layer 301, the dielectric layer 302, and partially the bottom silicon layer 303.

For example, the dielectric layer 302 may be used as the stopping layer for the lithography and the subsequent etching to realize the groove 401b. In this regard, the groove 401b may define the in-plane geometry of the sensor, especially of the cantilever of the sensor.

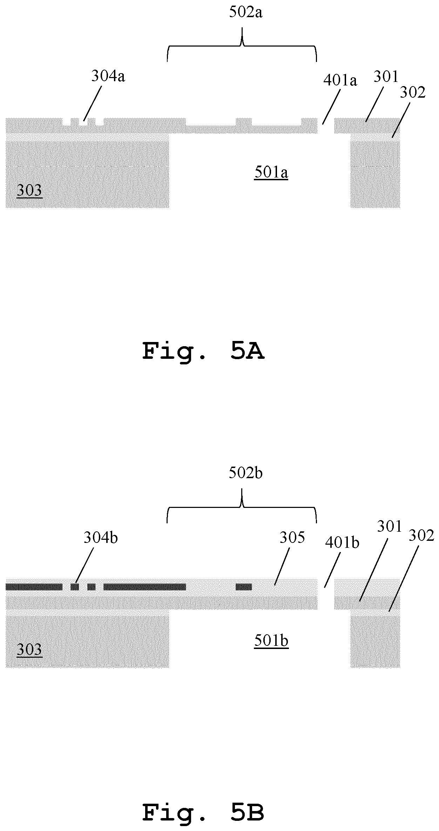

In Fig. 5A, a first exemplary process for forming the cavity and the cantilever according to the third aspect of the invention is illustrated. For instance, a length of the cavity may be defined on the bottom silicon layer 303. Afterwards, a groove 501a may be formed from the bottom silicon layer side (back-end processing) by etching the bottom silicon layer 303 and the dielectric layer 302.

For example, the dielectric layer 302 may be used as the stopping layer for the lithography and the subsequent etching to realize the groove 501a. In this regard, the groove 501a may define the in-plane geometry of the cavity and may further release the cantilever 502a with the optical waveguide 304a, especially by conjoining with the groove 401a.

In Fig. 5B, a second exemplary process for forming the cavity and the cantilever according to the third aspect of the invention is illustrated. For instance, the length of the cavity may be defined on the bottom silicon layer 303. Afterwards, a groove 501b may be formed from the bottom silicon layer side (back-end processing) by etching the bottom silicon layer 303 and the dielectric layer 302.

For example, the dielectric layer 302 may be used as the stopping layer for the lithography and the subsequent etching to realize the groove 501b. In this regard, the groove 501b may define the in-plane geometry of the cavity and may further release the cantilever 502b with the additional layer 305 comprising the optical waveguide 304b, especially by conjoining with the groove 401b.

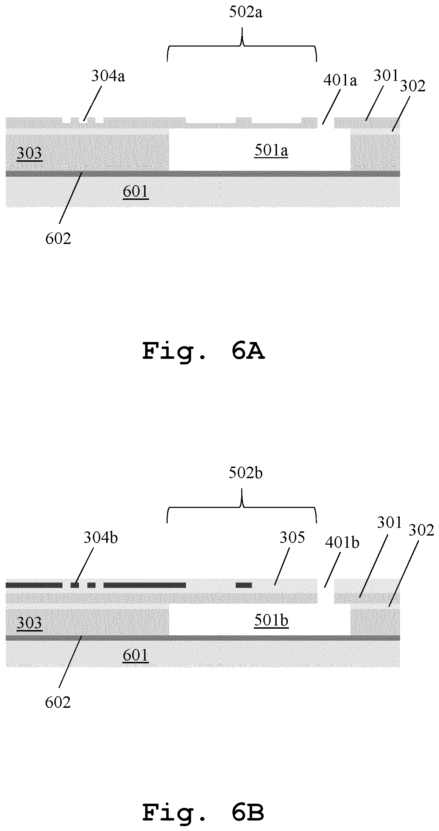

In Fig. 6A, a first exemplary process for sealing the cavity according to the third aspect of the invention is illustrated. For example, a substrate 601 may be bonded to the bottom silicon layer 303, especially to the processed bottom silicon layer as shown in Fig. 5A, in the back-end processing such that the substrate 601 may encompass at least the groove 501a. As such, the substrate 601 may completely seal the groove 501a to realize the cavity in the bottom silicon layer 303.

Accordingly, the sealing of the groove 501a may result in the cavity in the bottom silicon layer 303, which may surround the cantilever 502a realized on the first silicon layer 301 with the optical waveguide 304a.

In Fig. 6B, a second exemplary process for sealing the cavity according to the third aspect of the invention is illustrated. For example, the substrate 601 may be bonded to the bottom silicon layer 303, especially to the processed bottom silicon layer as shown in Fig. 5B, in the back-end processing such that the substrate 601 may encompass at least the groove 501b. As such, the substrate 601 may completely seal the groove 501b to realize the cavity in the bottom silicon layer 303.

Accordingly, the sealing of the groove 501b may result in the cavity in the bottom silicon layer 303, which may surround the cantilever 502b realized on the first silicon layer 301 with the additional layer 305 comprising the optical waveguide 304b.

Regarding the substrate 601 of Fig. 6A and Fig. 6B, the substrate 601 may be a silicon substrate or a glass substrate. For instance, the substrate 601 may be bonded to the bottom silicon layer 303 via oxide fusion between the substrate 601 and the bottom silicon layer 303. Alternatively, the substrate 601 may be bonded to the bottom silicon layer 303 via an adhesive layer 602 in between the substrate 601 and the bottom silicon layer 303. The adhesive layer 602 may be a layer of polyimide-based adhesives or a layer of acrylic-based adhesives.

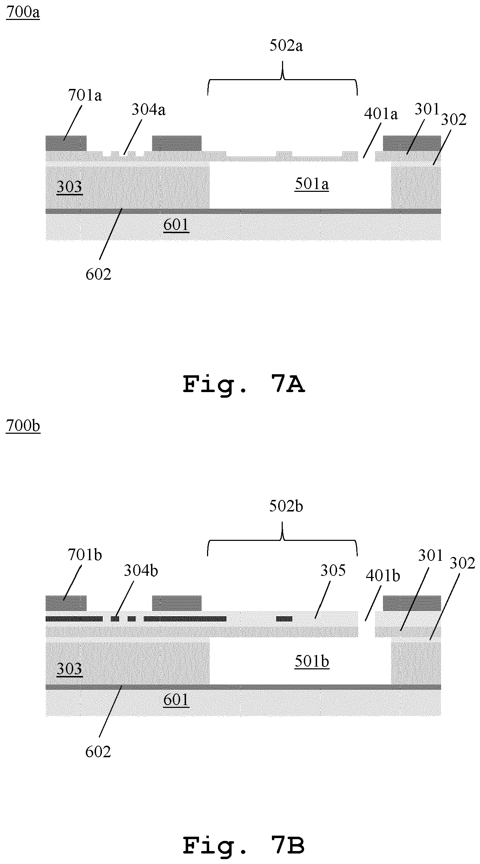

In Fig. 7A, a first exemplary process for forming the fluidic channel 701a according to the third aspect of the invention is illustrated. For example, the fluidic channel 701a may be formed on the top silicon layer 301, especially on the processed top silicon layer comprising the cantilever 502a with the optical waveguide 304a, in the front-end processing.

In this regard, the fluidic channel 701a may be formed in the front-end processing by laminating a dry-film-resist (DFR) on the processed top silicon layer comprising the cantilever 502a with the optical waveguide 304a. Afterwards, the DFR may be patterned via lithography such that a fluidic connection with the cavity can be realized, and the patterned DFR may be subsequently hard-backed in order to fix the patterns. This may result in the micro-optomechanical sensor 700a according to the third aspect of the invention.

It is to be noted that the fluidic channel 701a may be alternatively processed after the process for defining the in-plane geometry of the micro-optomechanical sensor, especially after the processing of the groove 401a to define the in-plane geometry of the cantilever, as shown in Fig. 4A.

In Fig. 7B, a second exemplary process for forming the fluidic channel 701b according to the third aspect of the invention is illustrated. For example, the fluidic channel 701b may be formed on the additional layer 305, especially on the processed additional layer comprising the optical waveguide 304b, in the front-end processing.

In this regard, the fluidic channel 701b may be formed in the front-end processing by laminating a dry-film-resist (DFR) on the processed additional layer comprising the optical waveguide 304b. Afterwards, the DFR may be patterned via lithography such that a fluidic connection with the cavity can be realized, and the patterned DFR may be subsequently hard-backed in order to fix the patterns. This may result in the micro-optomechanical sensor 700b according to the third aspect of the invention.

It is to be noted that the fluidic channel 701b may be alternatively processed after the process for defining the in-plane geometry of the micro-optomechanical sensor, especially after the processing of the groove 401b to define the in-plane geometry of the cantilever, as shown in Fig. 4B.

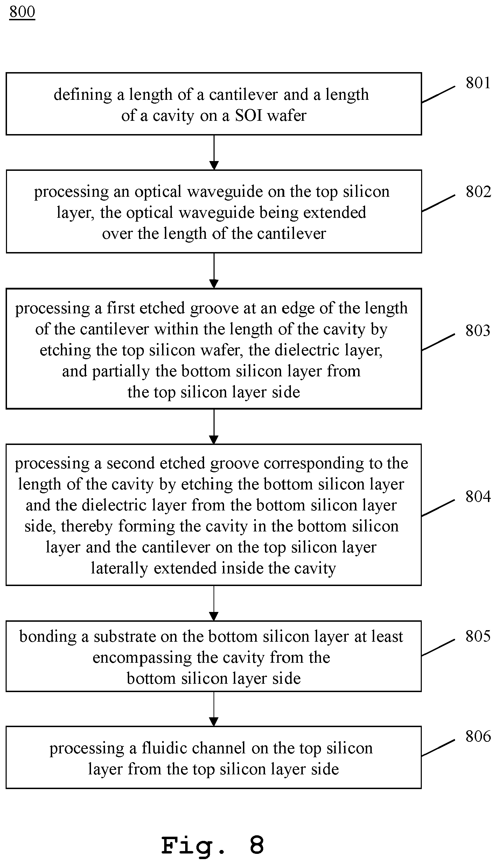

In Fig. 8, an exemplary flow diagram of the method 900 according to the third aspect of the invention is illustrated. In a first step 801, a length of a cantilever and a length of a cavity are defined on a SOI wafer comprising a dielectric layer in between a top silicon layer and a bottom silicon layer. In a second step 802, an optical waveguide is processed on the top silicon layer such that the optical waveguide extends over the length of the cantilever.

In a third step 803, a first etched groove is processed at an edge of the length of the cantilever within the length of the cavity by etching the top silicon wafer, the dielectric layer, and partially the bottom silicon layer from the top silicon layer side.

In a fourth step 804, a second etched groove corresponding to the length of the cavity is processed by etching the bottom silicon layer and the dielectric layer from the bottom silicon layer side in order to form the cavity in the second silicon layer and the cantilever on the first silicon layer laterally extended inside the cavity.

In a fifth step 805, a substrate is bonded on the bottom silicon layer in order to encompass at least the cavity from the bottom silicon layer side. In a sixth step 806, a fluidic channel on the top silicon layer is processed from the top silicon layer side.

It is important to note that, in the description as well as in the claims, the word "comprising" does not exclude other elements or steps and the indefinite article "a" or "an" does not exclude a plurality. A single element or other unit may fulfill the functions of several entities or items recited in the claims.

It should be understood that the term "and/or" used in the specification and the appended claims of this application refers to any combination and all possible combinations of one or more associated listed items, and includes these combinations.

It should also be understood that the word "connected" implies that the elements may be directly connected together or may be coupled through one or more intervening elements. Moreover, the disclosure with regard to any of the aspects is also relevant with regard to the other aspects of the disclosure.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A micro-optomechanical sensor (100) comprising:
a surface (101) comprising a cavity (102),
a fluidic channel (103) on the surface (101) connected to the cavity (102), wherein the fluidic channel (103) is configured to transport a fluid sample to the cavity (102),
a cantilever (105) on the surface (101) being laterally extended inside the cavity (102), wherein at least one side of the cantilever (105) is configured to be in contact with the fluid sample inside the cavity (102), and
an optical waveguide (106) on the surface (101) being extended to the cantilever (105), the optical waveguide (106) is configured to couple out a light signal from the cantilever (105) in order to optically transduce a mechanical vibration of the cantilever (105).

2. The micro-optomechanical sensor according to claim 1,
wherein the at least one side of the cantilever (105) comprises a coating of at least one antibody and/or at least one antigen and/or at least one protein and/or at least one aptamer, corresponding to at least one biological cell in the fluid sample.

3. The micro-optomechanical sensor according to claim 2,
wherein the mechanical vibration of the cantilever (105) corresponds to a natural resonance frequency, or
wherein the mechanical vibration of the cantilever (105) corresponds to a resonance frequency higher or lower than the natural resonance frequency due to an interaction of the at least one biological cell with the coating.

4. The micro-optomechanical sensor according to any of claims 1 to 3,
wherein the surface (101) further comprises an inlet (104) connected to the fluidic channel (103), wherein the inlet (104) is configured to receive the fluid sample and further to transport the fluid sample to the fluidic channel (103).

5. The micro-optomechanical sensor according to claim1,
wherein the cantilever (105) is arranged on the surface (101) in a non-overlapping manner with respect to the fluidic channel (103) on the surface (101).

6. The micro-optomechanical sensor according to any of claims 1 to 5,
wherein the optical waveguide (106) is a dielectric waveguide, preferably a silicon-based waveguide.

7. The micro-optomechanical sensor according to any of claims 1 to 6,
wherein the surface (101) is a processed silicon-on-insulator, SOI, wafer.

8. A sensor system (200) comprising:
at least one micro-optomechanical sensor (100a, 100b) according to any of claims 1 to 7,
at least one light source (201) optically coupled to the optical waveguides (107a, 107b) of the at least one micro-optomechanical sensor (100a, 100b), wherein the at least one light source (201) is configured to generate the light signal for one or more optical waveguides (107a, 107b) of the at least one micro-optomechanical sensor (100a, 100b), and
a processing device (206) optically coupled to the at least one micro-optomechanical sensor (100a, 100b), wherein the processing device (206) is configured to receive the light signal (204, 205) coupled out from each of the optical waveguides (107a, 107b) of the at least one micro-optomechanical sensor (100a, 100b) and further to optically transduce the mechanical vibration of the cantilevers (105a, 105b) of the at least one micro-optomechanical sensor (100a, 100b) .

9. The sensor system according to claim 8,
wherein for the at least one micro-optomechanical sensor (100a, 100b), the processing device (206) is further configured to:
process the light signal (204, 205) coupled out from the optical waveguide (107a, 107b) to detect a change in the resonance frequency of the mechanical vibration of the cantilever (105a, 105b) due to the interaction of the at least one biological cell with the coating, and
classify and/or identify the at least one biological cell in the fluid sample based on the detected change in the resonance frequency.

10. A method (800) for fabricating a micro-optomechanical sensor (700a, 700b) according to any of claims 1 to 7 on a silicon-on-insulator, SOI, wafer (300) comprising a dielectric layer (302) in between a top silicon layer (301) and a bottom silicon layer (303), the method comprises:
defining (801) a length of a cantilever and a length of a cavity on the SOI wafer (300),
processing (802) an optical waveguide (304a, 304b) on the top silicon layer (301), the optical waveguide (304a, 304b) being extended over the length of the cantilever,
processing (803) a first etched groove (401a, 401b) at an edge of the length of the cantilever within the length of the cavity by etching the top silicon wafer (301), the dielectric layer (302), and partially the bottom silicon layer (303) from the top silicon layer side,
processing (804) a second etched groove (501a, 501b) corresponding to the length of the cavity by etching the bottom silicon layer (303) and the dielectric layer (302) from the bottom silicon layer side, thereby forming the cavity in the bottom silicon layer (303) and the cantilever on the top silicon layer (301) laterally extended inside the cavity,
bonding (805) a substrate (601) on the bottom silicon layer (303) at least encompassing the cavity from the bottom silicon layer side, and
processing (806) a fluidic channel (701a, 701b) on the top silicon layer (301) from the top silicon layer side.

11. The method according to claim 10,
wherein the processing of the optical waveguide (304a, 304b) comprises:
forming optical waveguide components (304a) on the top silicon layer (301) from the top silicon layer side, or
bonding an additional layer (305) on the top silicon layer (301) and forming optical waveguide components (304b) on the additional layer (305) from the top silicon layer side.

12. The method according to claim 10 or 11,
wherein the processing of the first etched groove (401a, 401b) and/or the processing of the second etched groove (501a, 501b) further comprise using the dielectric layer (302) in between the top silicon layer (301) and the bottom silicon layer (303) as a etch stop layer.

13. The method according to any of claims 10 to 12, wherein the bonding of the substrate (601) on the bottom silicon layer (303) comprises:
bonding the substrate (601) on the bottom silicon layer (303) via oxide fusion between the substrate (601) and the bottom silicon layer (303), or
bonding the substrate (601) on the bottom silicon layer (303) via an adhesive layer (602) in between the substrate (601) and the bottom silicon layer (303).

14. The method according to any of claims 10 to 13, wherein the processing of the fluidic channel (701a, 701b) comprises:
laminating a dry-film-resist, DFR, on the top silicon layer (301),
patterning the fluidic channel (701a, 701b) via lithography on the DFR, and
hard-baking the patterned DFR.
